# EUROPEAN PATENT APPLICATION

(11) **EP 4 624 342 A2**
(43) Date of publication of application: **01.10.2025**
(21) Application number: 25165992.6
(22) Date of filing: 25.03.2025
(51) Int. Cl.: B64G 1/64, B64G 1/22

(54) **SYSTEMS, METHODS, AND DEVICES FOR A LOW MOMENT CONICAL HOLD AND RELEASE MECHANISM**

(30) Priority: 25.03.2024 US 202463569680 P
(71) Applicant: MacDonald, Dettwiler and Associates Corporation, Ste-Anne-de-Bellevue, QC H9X 3R2 (CA)
(72) Inventor: LAROUCHE, Steve, Quebec, H9X 3R2 (CA); MENNITTO, Giuseppe, Quebec, H9X 3R2 (CA); PERREAULT, Gabriel, Quebec, H9X 3R2 (CA); PHILIE, Vincent-Olivier, Quebec, H9X 3R2 (CA); ROUTHIER, Guillaume, Quebec, H9X 3R2 (CA)
(74) Representative: Zacco Norway AS

(57) **Abstract**

Provided is a bracket for use in a hold and release mechanism ("HRM") system for releasably holding a deployable payload in a stowed configuration. The bracket includes a conical portion for nesting with a conical portion of a second bracket for forming a first separation interface therebetween. The conical portion of the bracket is configured as a cone and the conical portion of the second bracket is configured as a cup. The bracket includes one or more bracket connectors for connecting the bracket to the deployable payload or a platform on which the deployable payload is stowed. The second bracket connects to whichever of the deployable payload or the platform the first bracket is not connected.

## Description

### Technical Field

The following relates generally to hold and release mechanisms, and more particularly to hold and release mechanisms for space-based applications.

### Introduction

Existing designs for Hold and Release Mechanisms (HRMs) experience a variety of problems related to manufacturing, assembly, test failures (fretting/wear) due to high bending and torsion at the HRM interface. These problems lead to issues particularly for deployable structures (reflectors, orientable antennas, thrusters, and the like). These issues may manifest at different stages such as, ground testing, launch and deployment. Failure or sub-optimal performance of HRMs can lead to costly damage and mission failure or degradation including during on-ground testing that leads to late modifications of the design.

Accordingly, there is a need for an improved hold and release mechanism that overcomes at least some of the disadvantages of existing hold and release mechanisms.

### Summary

A hold and release mechanism ("HRM") system for releasably holding a deployable payload in a stowed configuration is provided. The system includes a first HRM bracket, a second HRM bracket, and a retaining device. The first HRM bracket includes a first bracket body having a conical portion and one or more first bracket connectors for connecting the first HRM bracket to the deployable payload. The second HRM bracket includes a second bracket body having a conical portion and one or more second bracket connectors for connecting the second HRM bracket to a platform on which the first deployable payload is stowed. The retaining device is configured to releasably hold the first and second bracket bodies together in the stowed configuration in which the conical portion of the first bracket body nests with the conical portion of the second bracket body or the conical portion of the second bracket body is received by and nests in the conical portion of the first bracket body to form a separation interface of the HRM system.

The first HRM bracket may further include one or more first struts connecting the first bracket body to the one or more first bracket connectors. The first struts may be configured to release moments resulting from the interface of the first and second bracket bodies at the separation interface in the stowed configuration.

One or more of the first bracket body and the second bracket body may include a co-axial conical portion. The co-axial conical portion may be disposed co-axially with the conical portion of the corresponding bracket body such that the corresponding bracket body includes a double co-axial conical portion. The co-axial conical portion is for nesting in or receiving a third HRM bracket to form a successive separation interface of the HRM system.

The first struts may be configured such that the lines of action of each first strut converge to a first convergence point.

The first convergence point may be located at a separation plane of the separation interface.

The first bracket body may include a first hole configured to receive a rod or bolt of the retaining device. The first convergence point may be located on a longitudinal axis of the first hole.

The second HRM bracket may include one or more second struts. The one or more second struts may be configured such that the lines of action of each second strut converge to a second convergence point.

The first convergence point and the second convergence point may be collocated.

The first struts may be configured in a simple lattice structure or a complex lattice structure.

One or more of the conical portions of the first and second bracket bodies may be frustoconical.

Further provided is a bracket for use in a HRM system for releasably holding a first deployable payload in a stowed configuration, the bracket being a first bracket. The first bracket includes a first bracket body and one or more first bracket connectors. The first bracket body includes a first bracket first conical portion for nesting with a conical portion of a second bracket of the HRM system and forming a first separation interface of the HRM system therebetween. The first bracket conical portion is configured as a cone conical portion and the conical portion of the second bracket is configured as a cup conical portion for receiving the first bracket first conical portion or vice versa. The one or more first bracket connectors are attached to the first bracket body and configured to connect the bracket to the first deployable payload or a platform on which the first deployable payload is stowed. The second bracket is configured to connect to the remaining of the first deployable payload and the platform.

The first bracket first conical portion may be configured as a cone conical portion and the first bracket body may further include a first bracket second conical portion configured as a cup conical portion. The first bracket second conical portion may be configured to receive and nest with a conical portion of a third bracket of the HRM system for forming a second separation interface, the third bracket configured to connect to a second payload.

The first bracket first conical portion may be disposed longitudinally opposite the first bracket second conical portion and the cup configuration of the first bracket second conical portion may be disposed and configured to align with the cone configuration of the first bracket first conical portion.

The bracket body may include a hole for receiving a rod or bolt of a retaining device therethrough. The retaining device may be configured to releasably hold the first and second brackets together at the first separation interface of the HRM system and the first and third brackets together at the second separation interface of the HRM system.

The bracket may further include one or more first struts connecting the first bracket body to the one or more first bracket connectors. The one or more struts may be configured to release moments resulting from the interface of the first bracket with at least one other bracket, in the stowed configuration.

The first struts may be configured such that the lines of action of each first strut converge to a first convergence point.

The first bracket body may include a first hole configured to receive a rod or bolt of a retaining device, therethrough and the retaining device may be configured to releasably hold the first and second brackets together at the first separation interface of the HRM system. The first convergence point may be located on a longitudinal axis of the first hole.

The first convergence point may be collocated with a convergence point of action lines of struts of one or more of the second bracket and a third bracket of the HRM system.

The bracket may further include one or more first struts connecting the first bracket body to the one or more first bracket connectors, the one or more first struts configured to release moments resulting from the interface of the first bracket with one or more of the second and third brackets at the first and second separation interfaces respectively, in the stowed configuration. The first struts may be configured such that the lines of action of each first strut converge to a first convergence point. The first convergence point may be located at one or more of a first separation plane of the first separation interface, a second separation plane of the second separation interface, and a plane that is an average of the first and second separation planes.

The first bracket body may further comprise a cylindrical portion adjacent to an end of the conical portion that has the largest diameter. The one or more first struts may be connected to the bracket body at the cylindrical portion.

The cylindrical portion may be integrally formed with the conical portion.

The first bracket may be formed by one or more of printing, additive manufacturing, and bonding.

Further provided is a HRM system for releasably holding a deployable payload in a stowed configuration. The system includes a first HRM bracket configured to connect to a first deployable payload, a second HRM bracket configured to connect to a second deployable payload, a third HRM bracket configured to connect to a platform on which the first and second deployable payloads are stowed, and a retaining device. The retaining device includes a HRM bolt and is configured to releasably hold the first and second HRM brackets and second and third HRM brackets together at first and second separation interfaces of the HRM system, respectively. The retaining device holds the first, second, and third HRM brackets by holding the HRM bolt. The retaining device is configured to release the hold upon receiving a release input to the retaining device to allow separation at the first and second separation interfaces.

The HRM bolt may be configured to break upon receipt of the release input by the retaining device thereby releasing the hold of the retaining device.

Further provided is a method of holding a deployable payload by a HRM system in a stowed configuration for subsequent release. The method includes nesting a conical portion of a first bracket in a conical portion of a second bracket for forming a first separation interface in the stowed configuration. The method further includes connecting the first bracket to the deployable payload and the second bracket to a platform on which the first deployable payload is stowed in the stowed configuration, or vice versa. The method further includes releasably holding, by a retaining device, the first and second brackets together at the separation interface, the retaining device configured to release the hold of the retaining device upon receipt of a release input by the retaining device.

At least one of the first bracket and the second bracket may include a plurality of struts configured to release moments resulting from the interface of the first bracket with at least one other bracket.

The retaining device may include a breakable component configured to break upon receipt of the release input by the retaining device, the break of the breakable component to allow separation at the separation interface.

Releasably holding the first and second brackets together comprises may include disposing a bolt of the retaining device through the first and second brackets, holding the bolt at a second end of the bolt, and preloading the bolt by retracting the bolt from a first end to compress the first and second brackets together.

Retracting the bolt may include torquing down the bolt.

The method may further include delivering the release input to the retaining device to release the hold.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a HRM system, according to an embodiment;
Figure 2 is a cross-sectional view schematic diagram of a HRM system of Figure 1, according to an embodiment;
Figure 3 is a perspective view schematic diagram of a spacecraft including the HRM system of Figure 2 connected to two radiating arrays, according to an embodiment;
Figure 4A is a perspective view schematic diagram of the HRM system of Figure 1 with integral struts and strictions, according to another embodiment;
Figure 4B is a cross-sectional perspective view schematic diagram of the HRM of Figure 4A;
Figure 5A is a perspective view schematic diagram of the HRM system of Figure 1 with struts, according to another embodiment;
Figure 5B is a perspective view schematic diagram of two brackets of the HRM of Figure 1 in isolation with lattice structures, according to an embodiment;
Figures 6A-6F are front perspective, side, front, rear, top, and bottom views, respectively, of a first bracket of the HRM system of Figure 2 in isolation;
Figures 7A-7F are front perspective, side, front, rear, top, and bottom views, respectively, of a second bracket of the HRM system of Figure 2 in isolation;
Figures 8A-8E are views of the bolt of Figure 2 in isolation, according to an embodiment;
Figures 9A-9B are side and perspective view schematic diagrams of a payload held by four HRM systems, according to an embodiment;
Figures 10A-10B are cross sectional side view schematic diagrams of an embodiment of the HRM system of Figure 2 in a stowed configuration and bolt released and retracted configuration, respectively;
Figures 11A-11B are a partial cross sectional side perspective view of the HRM system of Figure 1, according to an embodiment;
Figures 12A is a side view of the HRM system of Figures 11A-11B with a power connector bracket, according to an embodiment;
Figure 12B is a perspective view of a bumper plate interface of the HRM system of Figures 11A-11B, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to a hold release mechanism, and more particularly to a pinned joint conical HRM supported by a combination of struts and strictions. The joint approximates a pinned condition by the compliance or the surrounding struts and strictions. The joint connects each of the members to be joined by a common rod or bolt going through a hole. The joint contact surfaces, typically conical surfaces, are compressed to provide joint stiffness by the tensioned rod or bolt. The conical joint stiffnesses are significant along the 3 translations and the 2 rotations along the axes perpendicular to the bolt axis. The non-significant stiffness is acting in rotation around the bolt axis as it relies on friction of the contact surfaces under the preload induced by the bolt. Hence the joint design described herein is a connection between two objects that allows only relative rotation about a single axis. Translations as well as rotations about any other axis are constrained - the joint therefore has one released degree of freedom. The joint reliably constrains all relative motions of two bodies where at least 2 joints link these bodies together.

The struts and strictions provide support in the joint vicinity to beneficially minimize the rotational stiffness of the joint assembly and maximize the load capacity of the joint. The struts and strictions beneficially minimize moments on the conical surface.

In existing systems, a spherical bearing may release the rotational degrees of freedom. However, the joint design of the present disclosure is beneficially more compact and enables greater part consolidation. Furthermore, spherical bearing integration to the joint necessarily leads to an offset between the spherical bearing rotation center and the joint contact surface, thus a significant bending is generated by this offset and the translational load acting on the spherical bearing. The joint design of the present disclosure beneficially enables an increased joint capacity over existing systems with spherical bearing integration by avoiding this offset. The HRM design of the present disclosure is highly scalable for use with smaller or larger geometries that may be based on prescribed loads and packaging constraints. This design of the HRM further enables the HRM to be manufactured by additive manufacturing (i.e. printing) of each side of the HRM with integral struts and strictions as a single piece or manufacture by combining of each side of the HRM with existing or standard strut towers (bonded struts and strictions) such as described in French patent number 3120856 B1.

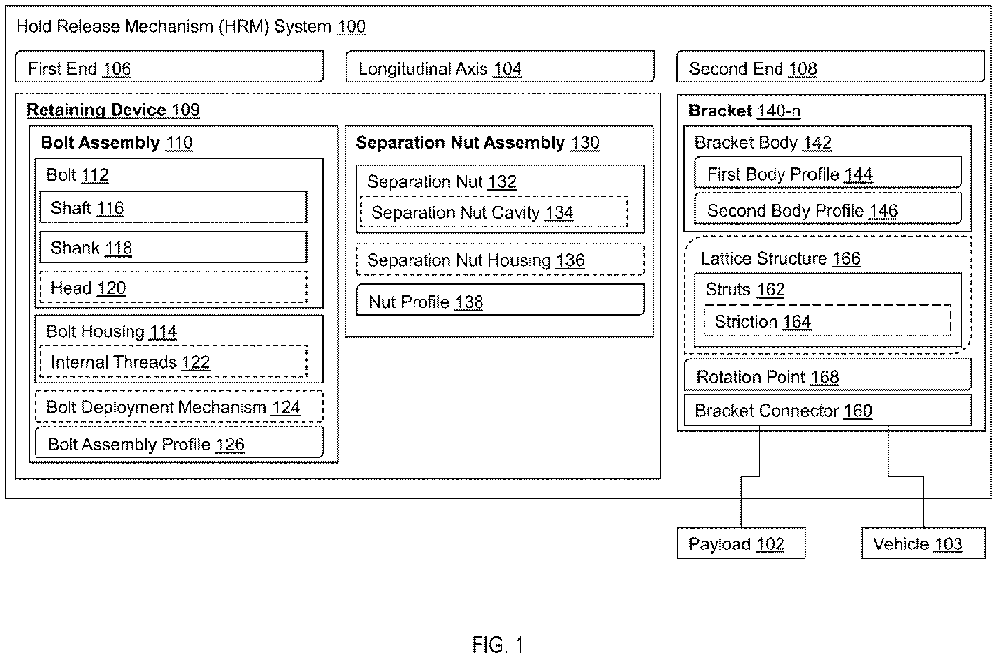

Referring now to Figure 1, shown therein is a hold and release mechanism (HRM) system 100, according to an embodiment.

The HRM system 100 is configured as a mechanism for providing a releasable hold between any number of payloads 102 and a vehicle 103. Payloads 102 are referred to herein collectively as payloads 102, generically as payload 102, specifically as payload 102-1, 102-2, ... 102-n. In some embodiments, the vehicle 103 is a space vehicle or spacecraft. While the vehicle 103 described herein is a structure deployable in space and translatable from one position to another, it is expressly contemplated the vehicle 103 may be any structure to which a payload 102 may be releasably held.

The HRM system 100 is configured to fire or transition from a hold configuration to a released configuration. Firing the HRM system 100, also known as triggering, releases the hold between the payload 102 and the vehicle 103. In some embodiments, firing the HRM system 100 releases one payload 102-1. In these embodiments, additional firings may release additionally payloads 102-2 ... 102-n. In some embodiments, each firing of the HRM system 100 releases multiple or all payloads 102 attached to the HRM system 100.

Releasing the payloads 102 may be for deploying the payloads 102 from a stowed configuration to a deployed configuration. Generally, in a space-based application of the HRM system 100, the payloads 102 are launched in a stowed configuration and operable in the deployed configuration. The HRM system 100 holds the payloads 102 in a stowed configuration until released. Release of the system 100 enables the payloads 102 to move from the stowed configuration to a deployed configuration. Example payloads 102 include reflectors, feeds, antennas, thrusters, solar panels, etc.

In the stowed configuration, the HRM system 100 has a longitudinal axis 104. In some embodiments, the longitudinal axis 104 is centered about the main portion of the HRM system 100. In the stowed configuration, a first end 106 of the HRM system 100 is disposed opposite the second end 108 of the HRM system 100 along the longitudinal axis 104.

The HRM system 100 includes a retaining device 109. The retaining device 109 is configured to releasably hold the payload 102 to the vehicle 103. The retaining device 109 is configured to release the hold of the HRM system 100 one or more payloads 102 upon firing of the HRM system 100.

The retaining device 109 includes a bolt assembly 110, also known as a bolt retracting device 110, for retracting and extending a bolt 112.

The retracting and extending of the bolt 112 correspond to releasing and holding, respectively, of the HRM system 100.

The bolt assembly 110 includes a bolt housing 114. The bolt housing 114 forms an external structure of the bolt assembly 110. Components of the bolt assembly 110 are generally contained within the bolt housing 114. It will be appreciated that the bolt 112, where extended, extends beyond the bolt housing 114. In some embodiments, the bolt housing 114 provides protection of the bolt assembly 110 from environmental factors such as radiation.

The bolt assembly 110 includes the bolt 112. It will be appreciated that bolt 112 may be known or referred to as a rod or pin. The bolt 112 is disposed along the longitudinal axis 104 of the HRM system 100.

In a retracted position, the bolt 112 is retracted into the bolt assembly 110. Retracting the bolt 112 accommodates the release of the hold of the HRM system 100. Specifically, retracting the bolt 112 minimizes the disposition of bolt 112 outside the HRM system 100 by retracting the bolt 112 into the bolt assembly 110 and/or one or more brackets 140 further described below.

In an extended position, the bolt 112 is extended beyond the bolt housing 114. Extending the bolt 112 accommodates the hold of the HRM system 100. Specifically, extending the bolt 112 disposes at least a portion of the bolt 112 in a position that enables the hold of the HRM system 100.

The bolt 112 includes a shaft 116. The shaft 116 provides a length for deploying the bolt 112. The shaft 116 may be cylindrical.

The bolt 112 further includes a shank 118. The shank 118 is disposed at the end of the bolt 112 that, in the extended position of the bolt 112, extends beyond the bolt housing 114. When in the hold configuration, the shank 118 is held by a separation nut assembly 130 (further described below).

In some embodiments, the bolt 112 includes a bolt head 120. The bolt head 120 may be fixedly attached to the shaft 116 at an end of the bolt 112 opposite the shank 118. The head 120 is configured to threadingly couple with internal threads 122 on an interior surface of the bolt housing to facilitate extension and retraction of the bolt 112 when the bolt 112 is rotated.

The bolt 112 is deployed (extending or retracted) by a bolt deployment mechanism 124. The bolt deployment mechanism 124 retracts the bolt 112 after the release of the separation nut 132. The bolt deployment mechanism 124 may be configured to retract the bolt 112 after the separation or deployment of the HRM system 100 components. The retraction of the bolt 112 by the bolt deployment mechanism 124 may be complete to ensure that the bolt completely clears any separation interface planes. The bolt deployment mechanism 124 may keep the bolt in place (i.e. immobile) during deployment of the payload 102. The extent of the retraction may be monitored and/or controlled based on the measurements of a load cell sensor (not shown).

In some embodiments, the bolt deployment mechanism 124 comprises a motor configured to deploy the bolt 112 via rotation of the bolt 112 or internal threads 122. In some embodiments, the bolt deployment mechanism 124 is heat activated, such as a bolt deployment mechanism comprising heat activated shape metal or memory alloy. In some embodiments, the bolt deployment mechanism 124 comprises a spring, such as a helical spring. The spring may be preloaded to retract the bolt when a constraining force is released, for example, by firing the HRM system. In the stowed configuration, the bolt deployment mechanism 124 may be preloaded by torqueing down the bolt. A preload of thousands of pounds (i.e. 5000 lbs.) may be provided to accommodate launch of the vehicle 103.

A profile of the bolt assembly 110 at a first end is referred to herein as bolt assembly profile 126. The bolt assembly profile 126 is configured to interface with a bracket 140, further described below. In some embodiments, the bolt assembly 110 is configured to separate from bracket 140 at the interface of the bolt assembly profile 126 and the bracket 140, when the HRM system 100 is fired. In such embodiments, the interface is referred to as a separation interface. The plane at a separation interface is referred to herein as a separation plane.

The retaining device 109 further includes separation nut assembly 130 also known as a release device 130.

The separation nut assembly 130 is configured to hold bolt 112 (i.e. in the stowed configuration). In some embodiments, the bolt 112 is held by the separation nut assembly 130 at the shank 118. In some embodiments, upon firing, the separation nut assembly 130 releases the hold on the bolt 112. In some embodiments, upon firing, the hold on the bolt 112 is released by causing a failure in the bolt 112 or separation nut 132 further described below. For example, the bolt 112 or separation nut may be broken by explosive means or by retracting the bolt 112 up to or beyond failure.

In some embodiments, the bolt assembly 110 or the separation nut assembly 130 may be fixed to the space vehicle 103.

The separation nut assembly 130 includes a separation nut 132. The separation nut 132 is configured to receive the shank 118 of the bolt 112 in a cavity 134 of the separation nut. When received, the separation nut cavity 134 is disposed opposite the longitudinal axis 104 such that the extension of the bolt 112 moves the shank 118 into the separation nut cavity 134.

The separation nut 132 is further configured to hold or constrain the bolt 112, in the stowed configuration. In some embodiments, the separation nut 132 specifically holds the shank 118. In some embodiments, the separation nut 132 is configured to release the bolt 112 in the deployed configuration. Releasable separation nuts 132 typically can be reused, are used for long-term attachment, and can be manually removed.

In some embodiments, the separation nut 132 is composed of a shape memory alloy configured to transition between a hold configuration and a released configuration. In the hold configuration, the separation nut 132 is configured to hard secure the shank 118, such as by radially holding the shank 118. The separation nut 130 may be fired by delivering a current to the separation nut 130. Delivery of a current reconfigures the separation nut 132 to release the hold of the separation nut 132 on the shank 118. In some embodiments, the separation nut 130 includes a helical spring, such as a linear helical spring configured to separate (i.e. push off) held components of the HRM system 100.

In some embodiments, the separation nut assembly 130 includes a separation nut housing 136. The separation nut housing 136 forms an external structure of the separation nut assembly 130. The components of the separation nut assembly 130 are generally contained within the separation nut housing 136. In some embodiments, the separation nut housing 136 provides protection of the separation nut assembly 130 from environmental factors such as radiation.

A profile of the separation nut assembly 130 at a first end is referred to herein as first nut profile 138. The first nut profile 138 is configured to interface with a bracket 140 (further described below). In some embodiments the separation nut assembly 130 is configured to separate from bracket 140 at the interface of the separation nut assembly 130 and the bracket 140, when the HRM system 100 is fired. In such embodiments, the interface is referred to as a separation interface. It will be appreciated that upon firing of the HRM system 100, the pressure that is exerted by the separation nut assembly 130 is released and thereby no pressure is left between the brackets 140, further described below. The release of pressure enables the deployment and separation of the payload 102 from the vehicle 103. The payload 102 may further be separated or deployed by an electric motor or potential energy spring (not shown).

The HRM system 100 further includes a bracket 140 for each payload 102 and the vehicle 103. It will be appreciated that the retaining device 109, in whole or in part, may serve as, be integrated with, or be part of a bracket 140.

The brackets 140 are referred to collectively as brackets 140, generically as bracket 140, and specifically as bracket 140-1, 140-2, ... 140-#. A generic payload 102 or subcomponent of a bracket 140, that corresponds to a bracket 140-n is referred to herein as payload 102-n or component ###-n respectively, and vice versa. For example, bracket 140-1 corresponds to payload 140-1 and bracket body 142-1, further described below. It will be appreciated that while bracket 140-n is described below as corresponding to payload 120-n, it is expressly contemplated that any bracket 140-n or 140-# may correspond to vehicle 103 in place of payload 120-n. Each bracket 140-n provides a structure via which the HRM system 100 holds the payload 120-n in the stowed configuration.

Each bracket 140-n is attached to a payload 102-n. In the stowed configuration, the HRM system 100 holds the bracket 140-n and by extension, the attached payload 102-n. The geometry of each bracket 140 is optimized to reduce moments and provide a stiff hold in all degrees of freedom.

Each bracket 140 includes a bracket body 142. The bracket body 142 provides a structure for the retaining device 109 to hold the payload 102 to the vehicle 103. The hold may be achieved by compressing together the bracket bodies 142 of two or more consecutive brackets 140. In some embodiments the bolt housing 114 and/or the separation nut housing 136 serves as, is integrated with, or is part of a bracket body 142.

The bracket body 142 includes a first body profile 144, or conical portion 144, at a first end. The bracket body 142 may include a second body profile 146, or conical portion 146, at a second end longitudinally opposite the first end. The first body profile 144 and second body profile 146 may be referred to as double coaxial conical portions 144, 146. The first body profile 144 and second body profile 146 are referred to herein generically as body profile 144 and collectively as body profiles 146. In the stowed configuration, each bracket body 142 interfaces with the remaining brackets 140 at a surface of a body profile 144 to form successive separation interfaces.

Where, in the stowed configuration, the interface between consecutive bracket bodies 142 is a separation interface, the body profile 144 of each bracket body 142 at the separation interface is conical. It will be appreciated that each conical body profile 144 may be an externally conical extrusion (i.e. a cone body profile 144) or an internal conical recess (i.e. a cup body profile 144). Each cone body profile 144 is configured to achieve a cup and cone interface by nesting within a cup body profile 144 of the next bracket 140. For the cup and cone interface, the only contact between the brackets 140 of the interface is a single conical contact surface. It will be appreciated that which bracket 140 comprises the cup body profile 144 and which comprises the cone body profile 144 is not based on the general or relative position of the bracket 140 in the HRM system and can be swapped to accommodate other design considerations.

The cup and cone interface directs the moments of the interface to a single contact surface such as the contact surface between the first body profile 144-1 of a first bracket 140-1 and the second body profile 146-2 of a second bracket 140-2. Directing the moments to this interface minimizes moments, bending and torsion at the interface. These minimizations beneficially enable high load capacities while satisfying positive margins of safety and maintaining compactness further enabling greater part consolidation over existing systems such as HRM systems 100 including spherical bearings. It will be appreciated that HRM system 100 includes conical interfaces where the interface is acting as a primary separable structural interface between the structure 103 and a payload 102. Separation planes may require increased in-plane shear capabilities. A conical surface at the separation planes beneficially increases the in-plane shear capability.

The cup and cone interface beneficially accommodates stacking of any number of brackets 140 and corresponding payloads 102. This stacking beneficially facilitates synchronized deployments and enables multiple separation planes with a single bolt 112. The stacking may be configured such that any outboard panel is stacked away from the vehicle 103. Cup and cone surfaces may be Titanium which may be conventionally machined or printed with additive manufacturing.

In some embodiments, the apex of the first body profile 144 is disposed at the longitudinal axis 104. This positioning brings any rotation of the bracket to about the longitudinal axis 104, which may avoid or mitigate bending or torsion experienced by the bolt 112 from such rotations. The rotation of each payload 102 may be constrained by multiple HRM systems 100. Each HRM system 100 has a torsional capacity and can resist some torsion. The resistance may be through bolt preload and friction. Each payload 102 may also be further constrained by a structure linking the payload 102 to the spacecraft 103. The structure may be a boom, deployable struts, or the like.

In some embodiments, the cup body profile 144 is the conical inverse or relief of the corresponding cone body profile 144. It is expressly contemplated that the inversion may not be symmetrical, particularly in magnitude.

In an example, a cone first body profile 144-1 of a first bracket 140-1 nests within a cup second body profile 146-2 of a second bracket 140-2, or vice versa. It will be appreciated that conical profiles of the first body profile 144 or the second body profile 146 may be frustoconical.

In some embodiments, the bolt assembly profile 126 or nut profile 138 is configured to interface with a first body profile 144-1 of a bracket 140-1. For example, where the first body profile 144-1 is a cone profile, a nut profile 138 may be configured in a cone profile to receive the first body profile 144-1 in the stowed configuration.

In some embodiments, the bolt assembly 110 or the separation nut assembly 130 is fixed to a bracket 140. The fixed connection is not separable such that the bolt assembly 110 or separation nut assembly 130 remains with the corresponding bracket 140 upon separation and deployment when the HRM system 100 is fired. The fixed interfaces typically are at each end of the HRM system 100 (i.e. the first and last interfaces of the HRM system 100). In these embodiments, the second body profile 146, does not touch a separation plane (i.e. is not a separation interface). Such, second body profiles 146 may be substantially flat, planar, configured to accommodate existing attachment means, or configured in any shape desired to accommodate the hardware attached to it. This may beneficially accommodate manufacturing or interfacing with existing attachment means such as bolts, the bolt assembly 110 or the separation nut assembly 130. For example, where the second body profile 146 is intended to be fixedly attached to a flat/planar or interlocking bolt assembly profile 126, the second body profile may be configured with a planar or interlocking profile to accommodate manufacturing the attachment and interfacing of separation nut assemblies 130 and the like with corresponding attachment hardware such as bolts.

In some embodiments, the second body profile 146 is indistinct from the corresponding separation nut assembly 130 or bolt assembly 110. For example, where the bracket 140 is integrated with the bolt assembly 110 or the separation nut assembly 130, it may not be apparent where the bracket 140 ends and the integrated component begins. The integrated bracket 140 may be formed via additive manufacturing, drilling and installing, and the like or combinations thereof.

Where the bolt assembly 110 or separation nut assembly 130 is fixed to or integrated with a bracket 140-n, the bolt 112 or separation nut cavity 134, respectively, is aligned with the longitudinal axis 104 of the bracket 140-n. It will be appreciated that this alignment remains when the payload 102-n connected to bracket 140-n is deployed. Maintaining this alignment may simplify the process of stowing the bracket 140-n and corresponding payload 102-n by beneficially avoiding re-establishing the alignment.

Each bracket 140 includes one or more bracket connectors 160.

Each bracket connector 160 is a structure of the bracket 140-n used to attach the bracket 140-n to the payload 102-n or the vehicle 103 (e.g., by receiving a fastener therethrough, such as a bolt). The bracket connectors 160 may be configured such that the plane defined by the interface of each bracket connector 160 with the payload 102-n or vehicle 103 is parallel to the longitudinal axis of the bolt 112.

At least one bracket 140 of the HRM system 100 further includes two or more struts 162. Each strut 162 may be referred to as a rod 162 or leg 162.

The struts 162 connect the bracket body 142 to the bracket connectors 160. Each strut is substantially linear.

In some embodiments, the struts 162 may include strictions 164. The strictions 164 are flexible to release moments component interfaces of the HRM system 100. The strictions 164 may be a full strut 162 or any section thereof.

The strut 162 and striction 164 configuration minimizes moments, bending and torsion at the interface. These minimizations beneficially enable high load capacities while maintaining compactness further enabling greater part consolidation over existing systems such HRM systems including spherical bearings.

The struts 162 are arranged in a lattice structure 166. In some embodiments, the lattice structure is a simple lattice structure 166 where each strut 162 terminates at a first end in a bracket connector 160 and at a second end in bracket body 142. Simple lattice structures 166 may provide stability over complex lattice structures 166, further described below.

In some embodiments, the lattice structure 166 is a complex lattice structure 166. In the complex lattice structure 166, the ends of each strut 162 terminate at either a bracket connector 160, the bracket body 142, or at a node (i.e. a termination point of multiple struts 162). At least one strut 162 of the lattice structure 166 terminates at the bracket body 142. Also, at least one strut 162 terminates at each bracket connector 160. It will be appreciated that the strut 162 that terminates at the bracket body 142 and the strut 162 that terminates at a bracket connector may be the same or different struts 162.

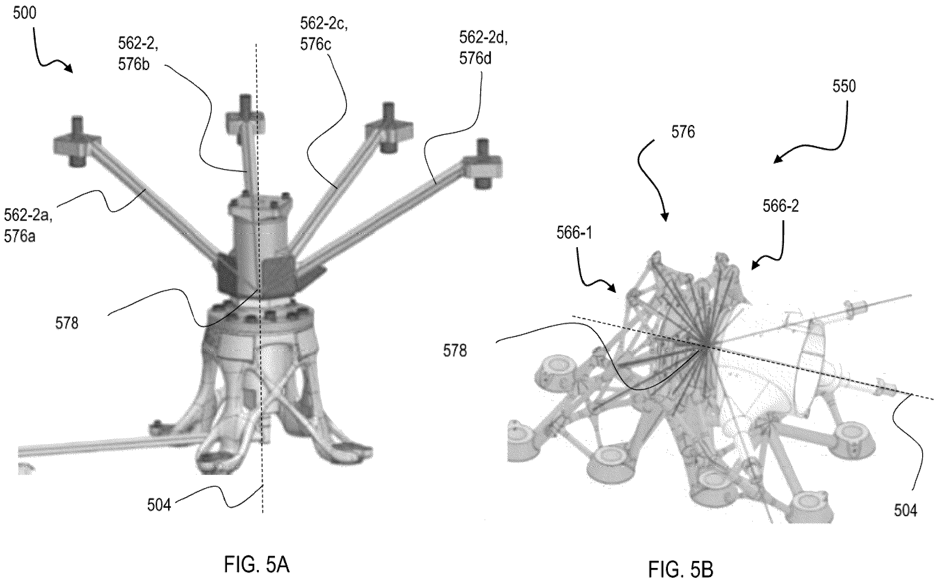

The struts 162 are configured in the lattice structure 166 to reduce the loads through lattice structure 166 and reduce stresses at the interface between the bracket connectors 160 and the corresponding payload 102 or vehicle 103. The lattice structure 166 configuration of the rods 162 provides that the bracket 140 is flexible in bending and in torsion but still stiff in all translational degrees of freedom. This flexibility may accommodate coefficient of thermal expansion (CTE) gradients also referred to as a mismatch between two joined structures such as two brackets 140. The lattice structure configuration 166 brings rotation moments of the bracket 140 substantially to a point. For example, lines of action of each strut 162 for each bracket, as shown in Figures 5A and 5B described below, converge to a single point. This point may be at the separation plane or bottled interface of the bracket 140. In some embodiments the convergence point corresponding to each bracket 140 is the same across all brackets 140. This lattice structure 166 configuration beneficially minimizes moments, bending and torsion between conical interfaces at the first body profile 144, second body profile 146, and the separation nut assembly 130. These minimizations beneficially enable high load capacities while maintaining compactness further enabling greater part consolidation over existing systems. The lattice structure 166 is configured such that any corresponding separation plane is perpendicular to the longitudinal axis of bolt 112. The lattice structure 166 may be axisymmetrical relative to the longitudinal axis of bolt 112. The axisymmetry may be partial and in particular in the vicinity of the bracket body 142. The lattice structure may change from the bracket body 142 to the bracket connectors 160.

In some embodiments, the axis of each strut 162 of a bracket 140 intersects (i.e. converges) at a single point. The point may be at the first body profile 144 and specifically at the apex of the first body profile 144.

In some embodiments, the bracket 140 or a substantial portion thereof is an integrated structure. For example, the bracket 140 may be formed as a single piece via additive manufacturing. It is expressly contemplated that the integrated structure may be a portion of bracket 140. For example, the bracket body 142 and the struts 162 may be formed as a single piece via additive manufacturing with the bracket connectors 160 manufactured separately. The integrated structure avoids or simplifies complex assembly based manufacturing. This simplification is particularly beneficial in space applications where manufacturing and assembly options may be limited.

Each bracket 140 may be printed with integral struts 162 and strictions 164 as a single piece using additive manufacturing. Printing the bracket 140 may be for small assemblies. Each bracket 140 may also be manufactured via existing methods such as traditional manufacturing or bonding of the struts 162 and strictions 164. These methods may be used for large assemblies.

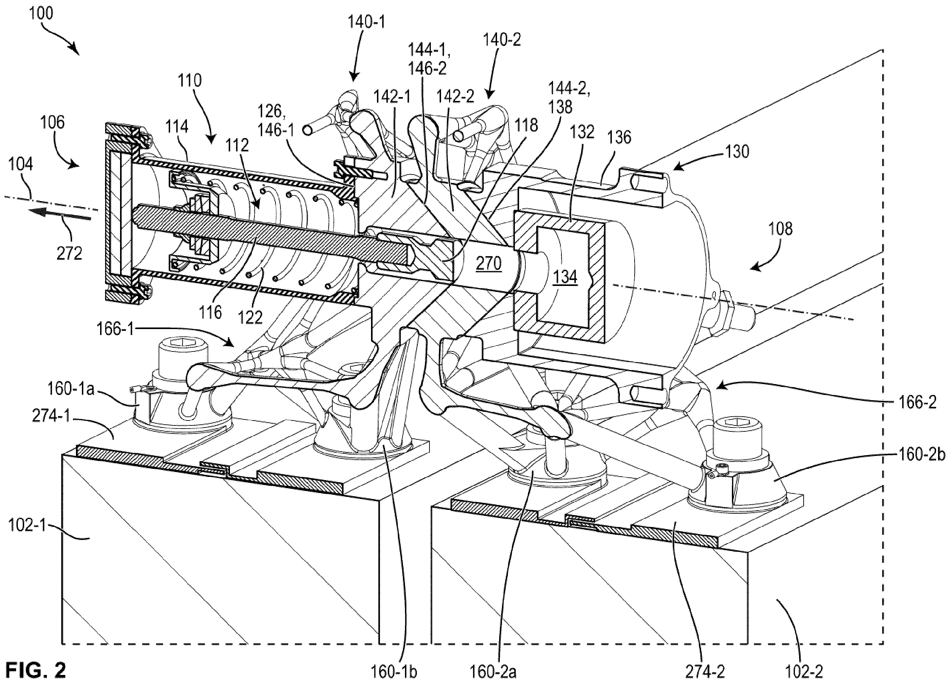

Referring now to Figure 2, shown therein is a cross-sectional perspective view schematic of a HRM system 100, according to an embodiment. The HRM system 100 is an embodiment of the HRM system 100 of Figure 1. Components thereof are similarly referenced.

It will be appreciated that Figure 2 illustrates a configuration of the HRM system 100 between the stowed and the deployed configurations.

Specifically, in the configuration shown, the hold of the separation nut 132 is shown as released, the bolt 112 is shown as retracted, and the HRM system 100 is otherwise in the stowed configuration. The retraction of the bolt 112 is in a direction 272 from the second end 108 to the first end 106 along the longitudinal axis 104.

In this embodiment, the bolt assembly 110 is disposed the first end 106. The bolt assembly 110 is fixed to the first bracket 140-1 at an interface between the bolt assembly profile 126 and the second body profile 146-1 of the first bracket 140-1. The interface is substantially planar and secured by existing means. The fixing aligns the longitudinal axes of the bolt assembly 110 and the first bracket 140-1. It will be appreciated that in a deployed configuration the bolt assembly 110 remains fixed to the bracket 140-1 and maintains the alignment of their respective longitudinal axes.

The bolt 112 is disposed along the longitudinal axis 104. Portions of the bolt 112 and particularly the shank 118 extend beyond the bolt housing 114.

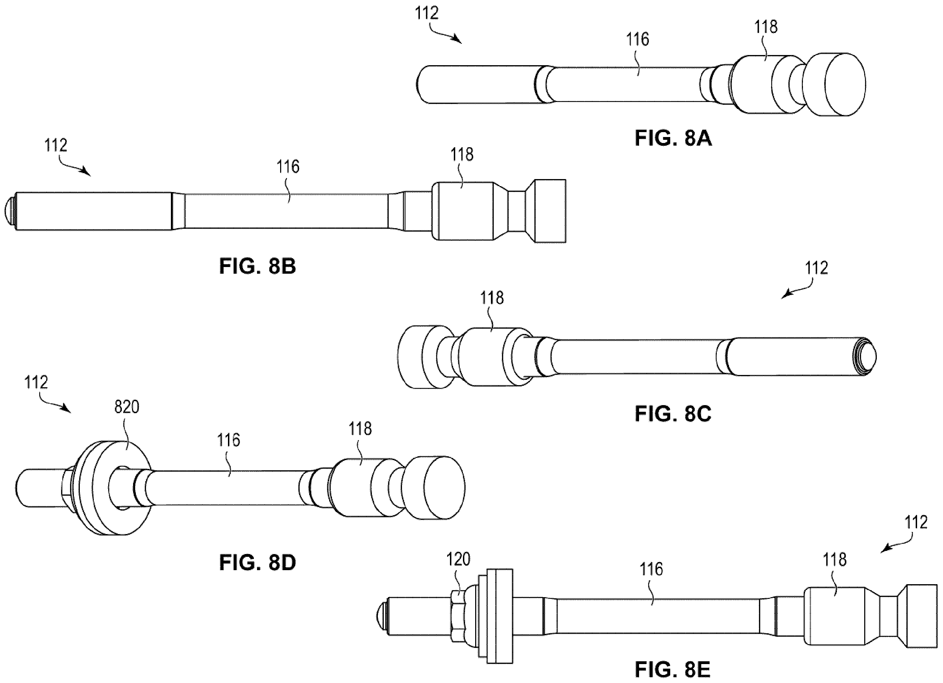

A schematic of bolt 112 from a first perspective view, a side view, and second perspective view, according to an embodiment is shown in Figures 8A through 8C. Figures 8D through 8E show a schematic of the bolt 112 with a bolt head 120, from a perspective view and a side view, according to a further embodiment.

Each bracket 140 and the separation nut assembly 130 includes a bolt hole 270. Collectively the bolt holes 270 provide a path for the bolt 112 to retract through and extend into the separation nut 132. In the stowed configuration bolt holes 270 align along the longitudinal axis 104. The bolt holes 270 traverse the brackets 140 and the separation nut assembly up to the separation nut cavity 134.

The first body profile 144-1 of bracket 140-1 is configured as a cone profile and the second body profile 146-2 of the bracket 140-2 is configured as corresponding cup profile. In the stowed configuration, the cone profile of the first body profile 144-1 nests within second body profile 146-2. Similarly, the first body profile 144-2 of bracket 140-2 is configured as a cone profile and the nut assembly profile 138 is configured as corresponding cup profile. In the stowed configuration, the cone profile of the first body profile 144-1 nests within second body profile 146-2. This nesting aligns the bolt holes 270. This configuration and alignment bring the moments experienced at each of the cup-cone separation interfaces 144-1:146-2 and 144-2:138 to point along the longitudinal axis 104. The point may be the common apex of the cup and cone. The interface minimizes moments, bending and torsion of the HRM system 100.

Bracket body 142-1 is connected to bolt connector 160-1a and 160-1b via lattice structure 166-1. Bracket body 142-2 connected to bolt connector 160-2a and 160-2b via lattice structure 166-2. The lattice structures 166-1 and 166-2 are configured to bring the moments experienced by each bracket 140-1, 140-2 to a point along the longitudinal axis 104. Bringing the moments to a point minimizes moments, bending and torsion of the HRM system 100.

The bracket 140-1 connects to payload 102-1 via bolt connectors 160-1a and 160-1b. In some embodiments, the connection is via a panel 274-1. The bracket 140-2 connects to payload 102-2 via bolt connectors 160-2a and 160-2b. In some embodiments, the connection is via a panel 274-2.

Brackets 140-1 and 140-2 are each integrated brackets. For example, the bracket body 142-1, lattice structure 166-1 and bracket connectors 160-1a and 160-1b are formed as an integrated part. The brackets 140-1 and 140-2 may be formed via additive manufacturing, such as 3D printing.

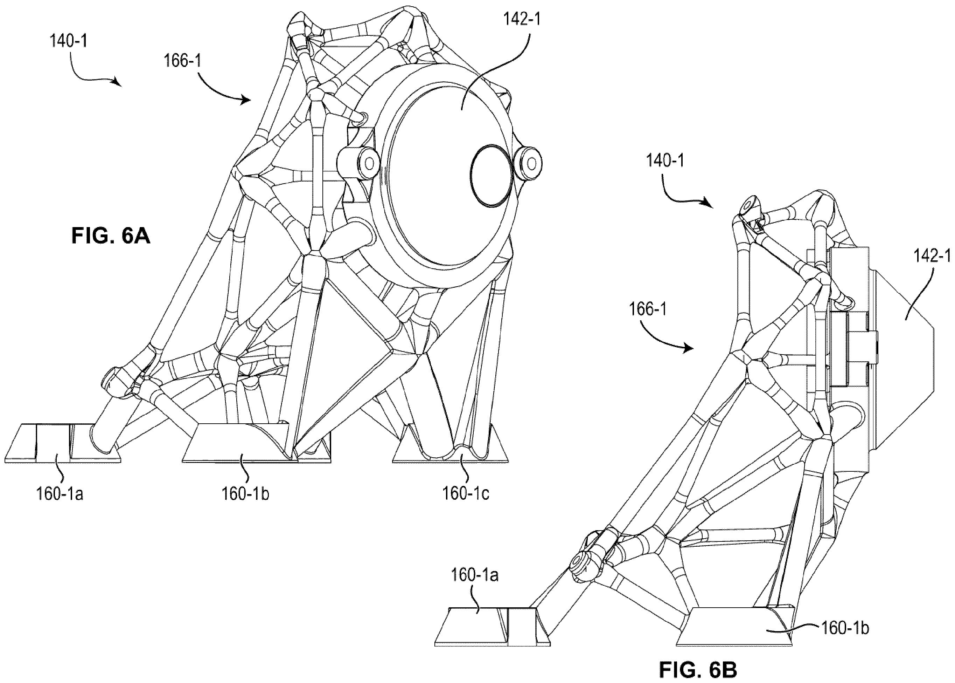

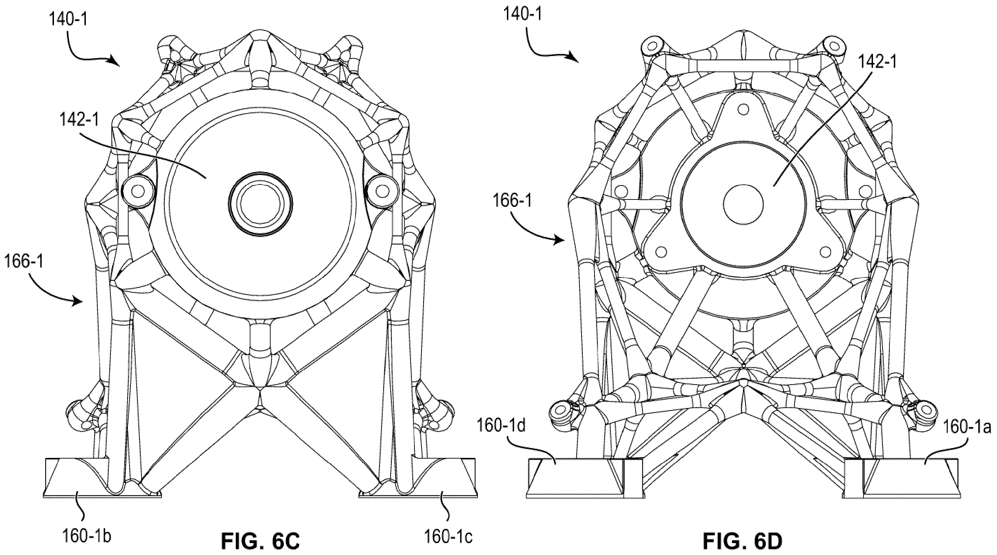

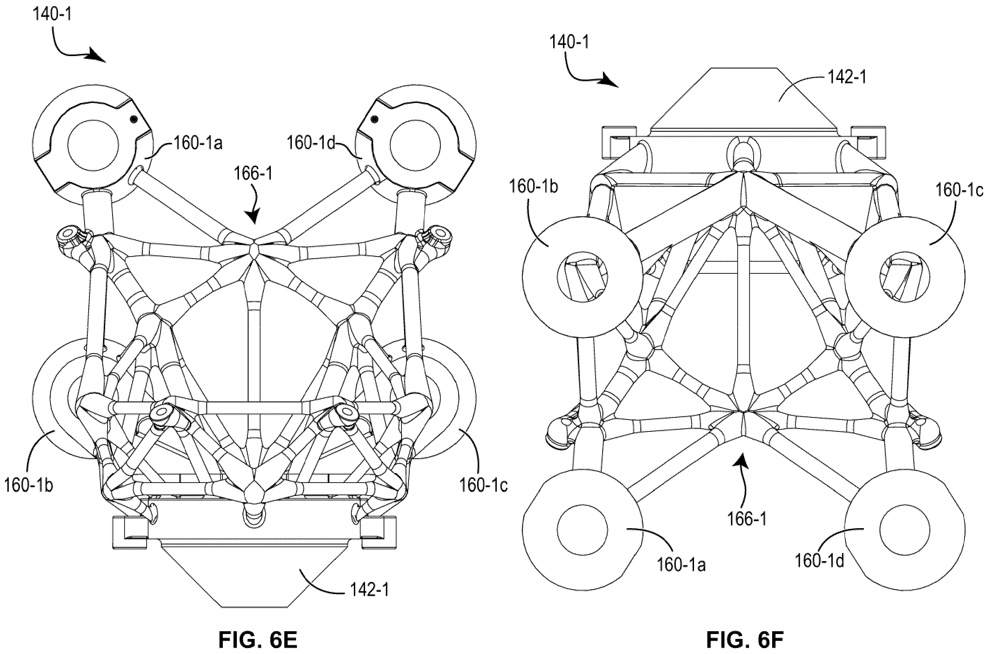

A schematic of an embodiment of bracket 140-1 from a perspective, side, front, back, top, and bottom view is shown in Figures 6A through 6F, according to an embodiment. The first body profile of the bracket body 142-1 of the bracket 140 is a cone profile. The bracket body 142 is connected to four bracket connectors 160a through 160d by lattice structure 166.

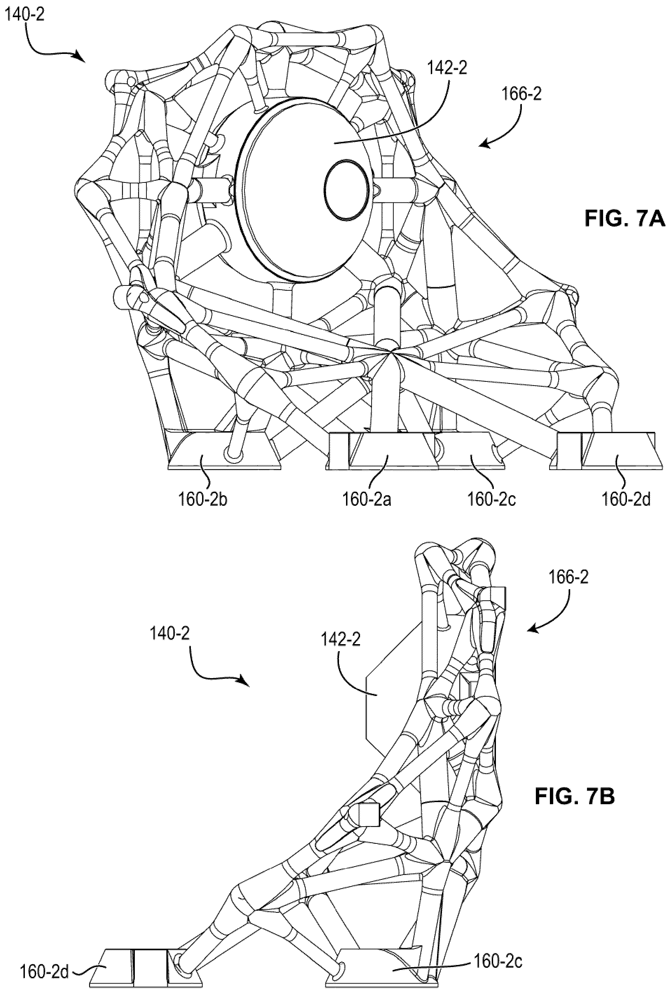

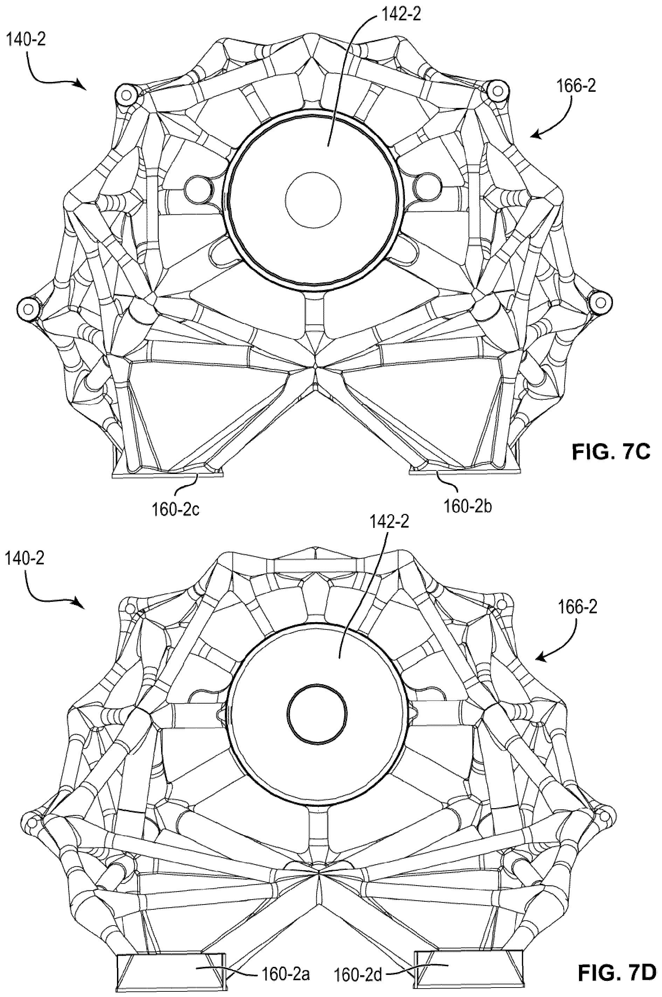

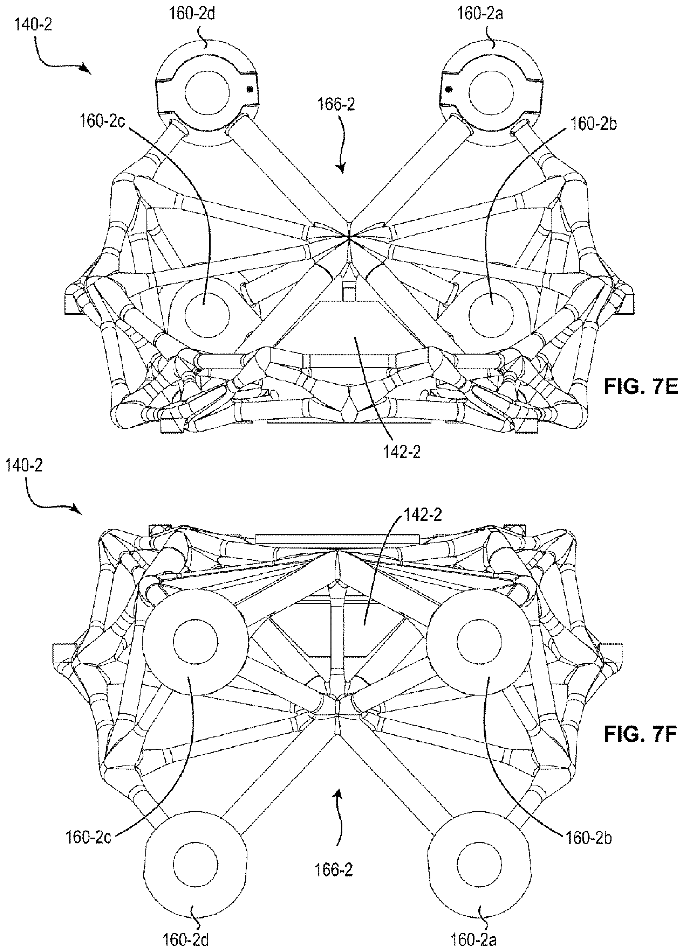

A schematic of an embodiment of bracket 140-2 from a perspective, side, front, back, top, and bottom view is shown in Figures 7A through 7F, according to an embodiment. The first body profile of the bracket body 142-2 of the bracket 140-2 is a cup profile. The bracket body 142-2 is connected to four bracket connectors 160-2a through 160-2d by lattice structure 166-2.

Various embodiments of the HRM system distinguished by permutations in the order and interfaces of the bolt assembly 110, separation nut assembly 130, and the bracket 140 as well as the object each is connected to are expressly contemplated. In an example, the disposition of the bolt assembly 110 and separation nut 120 may be the reverse of the disposition shown. Specifically, the bolt assembly 110 may be connected to the vehicle (not shown) and disposed at the second end 108 and the separation nut assembly 130 may be disposed at the first end 106 and connected to the bracket 140. In a further example, payload 102-1 is connected to the separation nut assembly 130 and the vehicle (not shown) is connected to the bracket 140-1.

The bolted or pinned conical bracket body 142 configuration and the strut 162 and striction 164 configuration each individually and in combination minimizes moments, bending and torsion at the HRM separation interfaces. These minimizations beneficially optimize load capacity of the HRM system 100, reduce damage to mating surfaces, optimize the efficiency of mass to volume ratios, provide in-plane flexibility to the HRM system 100, accommodate mounting to structures with different coefficients of thermal expansion (CTE), accommodate existing advanced strut towers, accommodate additive manufacturing, and is adaptable and scalable to variously sized geometries based on a balancing of required load ranges and packaging constraints.

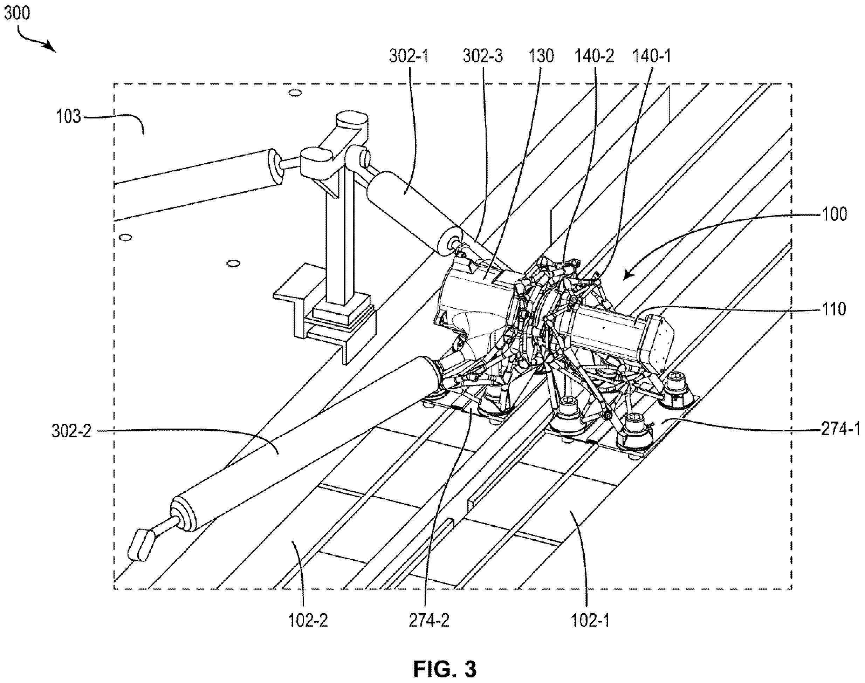

Referring now to Figure 3, shown therein is a perspective view schematic of a space vehicle system 300 in a stowed configuration, according to an embodiment.

The space vehicle system 300 may be an embodiment of two payloads 102-1 and 102-2 held to a space vehicle 103 by the HRM system 100 of Figure 1. The space vehicle 103, payloads 102-1 and 102-2, and HRM system 100 are configured similarly to those described in Figure 1. Specifically, the bolt assembly 110, separation nut assembly 130, and brackets 140-1 and 140-2 as similarly configured. The separation nut assembly 130 is connected to the space vehicle 103 by three vehicle struts 302-1, 302-2 and 302-3.

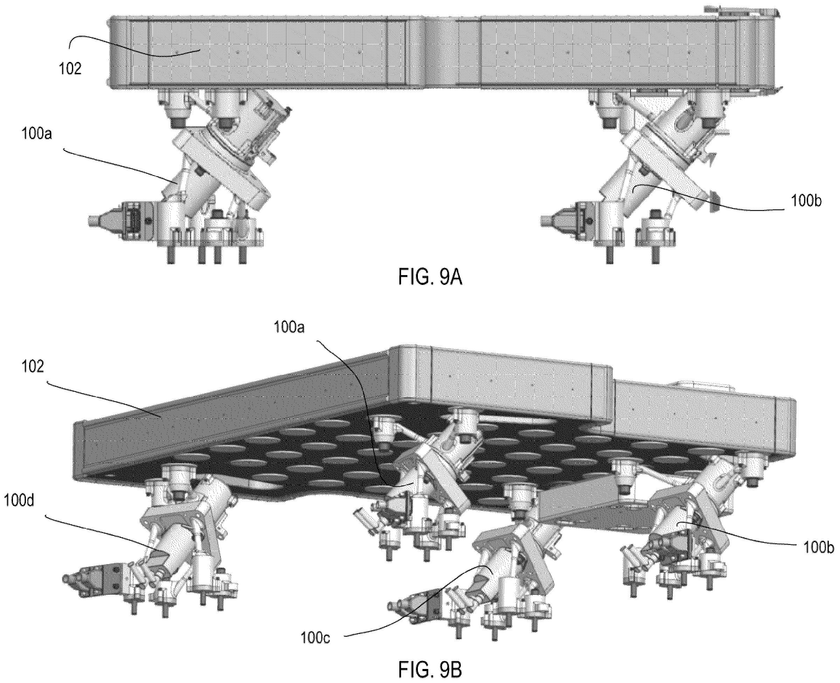

It is expressly contemplated that each payload 102-1 or 102-2 may be held to the space vehicle 103 by one or more HRM systems 100. In an example, Figures 9A and 9B show a payload 102 held by four HRM systems 100a through 100d, according to an embodiment.

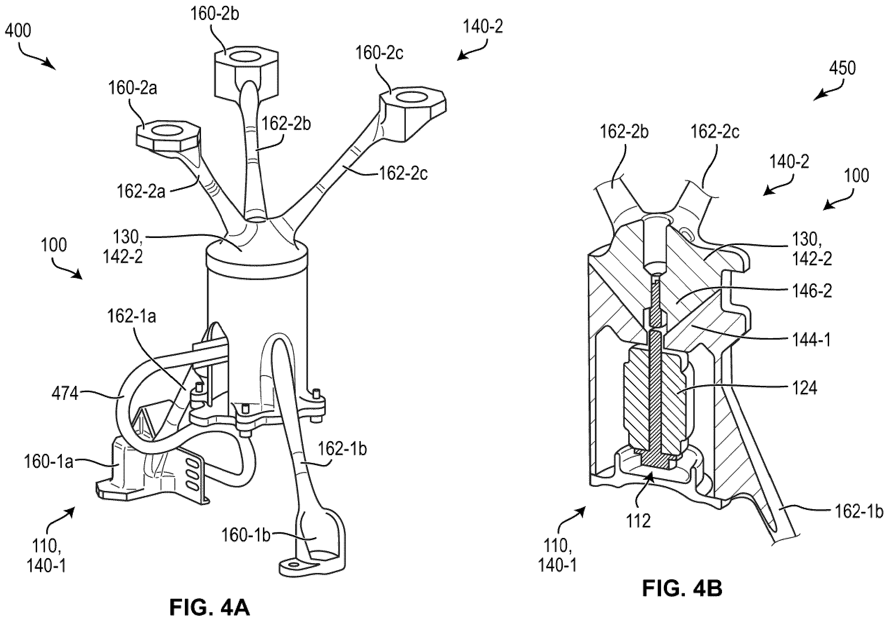

Referring to Figures 4A and 4B, shown therein is a perspective view schematic 400 and cross sectional schematic 450 of a HRM system 100 in a stowed configuration, according to another embodiment.

The HRM system 100 is configured similarly to HRM system 100 of Figure 1. The HRM system 100 is a single stage separation HRM system 100.

In this embodiment, the first bracket 140-1 is integrated with the bolt assembly 110 such that the bracket 140-1 is not a discrete component from the bolt assembly 110.

Struts 162-1a and 162-1b connect the bolt assembly 110 to bracket connectors 160-1a and 160-1b. The struts 162-1a and 162-1b and bracket connectors 160-1a and 160-1b may also be integrated with bracket 140-1 and bolt assembly 110.

Tether 474 is communicatively and electrically connected to bolt deployment mechanism 124 for providing signal and power to the bolt deployment mechanism 124, respectively, for actuating the retraction of the bolt 112. It will be appreciated, that the embodiment shown, is a single stage separation embodiment where the bolt 112 is a breaking bolt and the separation nut assembly 130 is configured to hold the bolt until the bolt 112 or separation nut 132 breaks, fractures, or splits into two pieces upon firing. The break, fracture or split may be achieved by retracting the bolt 112 until failure or by an explosive core. Where the separation nut 132 is broken, the bolt 112 may be reused. Firing via explosive core fasteners, also known as pyrotechnic fasteners, provides controlled quick or rapid release and structural separation over retracted bolts 112 (breaking or otherwise). This may be beneficial or required in some applications including spacecraft, missile, and marine applications. The explosive core may be activated by a command provided, for example, by an electric current.

Similarly, a bracket body 142-2 of second bracket 140-2 is integrated with the separation nut assembly 130 such that the bracket body 142-2 is not a discrete component from the separation nut assembly 130.

Struts 162-2a, 162-2b, and 162-2c connect the separation nut assembly 130 to bracket connectors 160-2a and 160-2b. The struts 162-2a and 162-2b and bracket connectors 160-2a and 160-2b may also be integrated with bracket body 142-2 and separation nut assembly 130.

The bracket connectors 160 corresponding to each of the bolt assembly 110 and the separation nut assembly 130 severely are configured to connect to a space vehicle or payload (not shown). It will be appreciated that the connected component (i.e. the space vehicle or payload) may be interchangeable.

In the embodiment shown, the first body profile 144-1 of the first bracket 140-1 is a cup profile configured to interface with a cone second body profile 146-2 of the second bracket 140-2. Embodiments with the cup-cone profiles inverted are expressly contemplated.

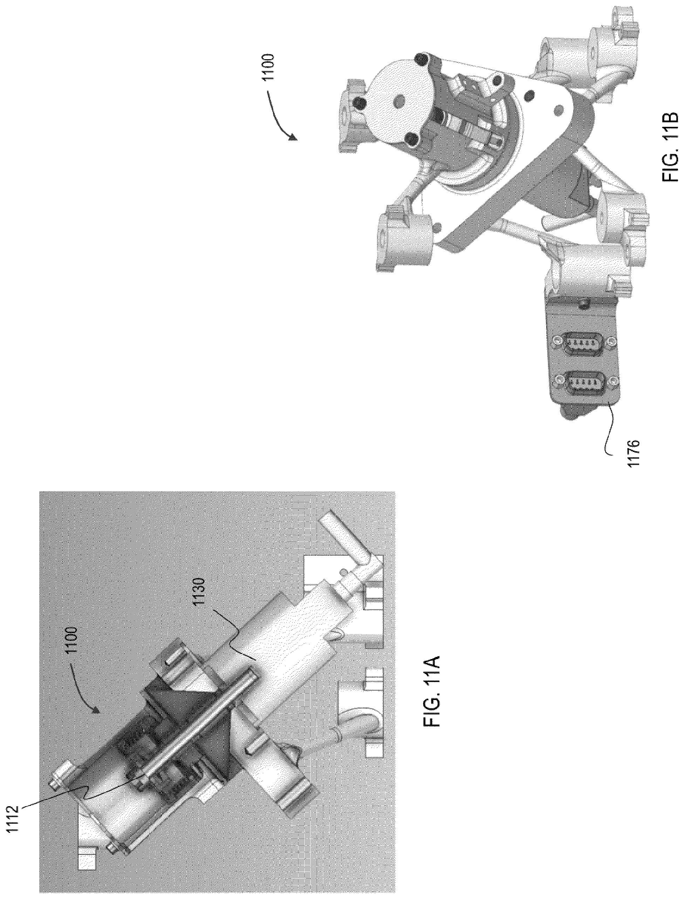

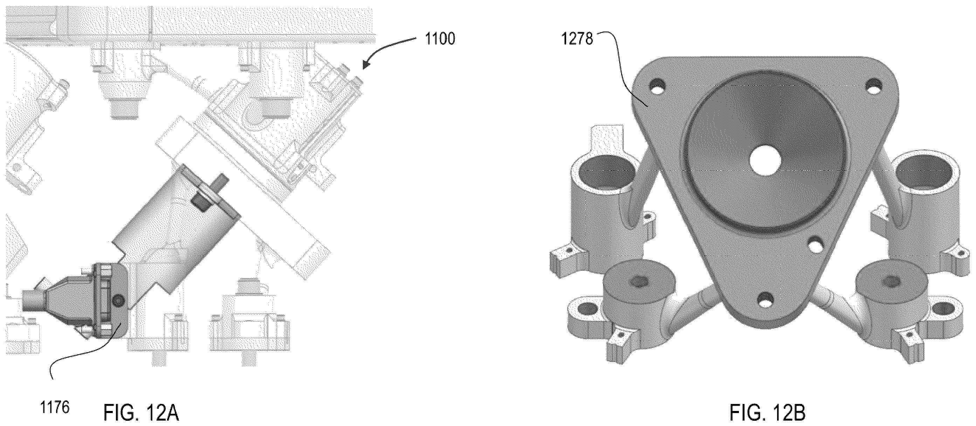

Figures 11A and 11B show a HRM system 1100 which is a further embodiment of the HRM system 100 of Figure 1. The HRM system 1100 is similarly configured to the HRM system 100 of Figures 1 and 2. The HRM system 1100 is a single stage separation HRM system 100 with a separation nut 1130 configured to release the bolt 1112 upon firing. The HRM system 1100 includes a power connector bracket 1176 as further shown in Figure 12A and a bumper plate interface 1278 as shown in Figure 12B.

Referring now to Figures 5A and 5B, shown therein is a perspective view schematic of a HRM system 500 with struts 562-2a through 562-2d and a HRM system 550 with lattice structures 566-1 and 566-2, respectively. The HRM system 500 and HRM system 550 may be embodiments of the HRM system 100 of Figure 1.

Each moment and force experienced by the HRM systems 500 and 550 are illustrated as a line of action 576. The lines of action 576 are referred to generically as line of action 576, specifically as line of action 576a through 576d and collectively as lines of action 576. The lines of action 576 for each HRM system 500 and 550 converge at a point 578 or apex 578.

The struts 562-2a through 562-2d and the struts of the lattice structures 566-1 and 566-2 are configured such that the lines of action 576 generally pass through each corresponding longitudinal axis. The struts 562-2a through 562-2d and lattice structures 566-1 and 566-2, are further configured such that the respective point 578 is on the corresponding longitudinal axis 504.

Referring specifically to Figure 5B, the HRM system 100 includes two cup-cone separation planes (not shown). The cup-cone separation planes are the interface planes of cup-cone separation interfaces such as the cup-cone separation interfaces 144-1:146-2 and 144-2:138 of Figure 2. In some embodiments, the point 578 is located at a mid-point between the separation planes along the axis 504.

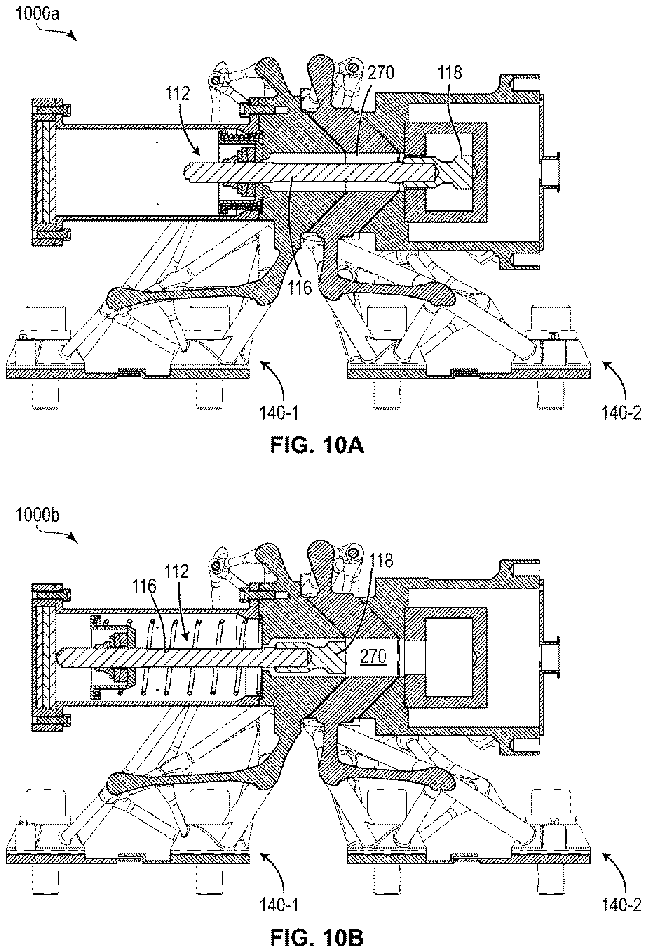

Referring to Figures 10A and 10B, shown therein is a cross sectional side view schematic of an embodiment of the HRM system 100 of Figure 2 in a stowed configuration 1000a and with the bolt 112 released and retracted 1000b.

It will be appreciated that in a fully deployed configuration, the brackets 140-1 and 140-2. The bolt 112 is retracted in the bolt hole 270 such that the shaft 116 is disposed substantially in the bolt housing 114 and the shank 118 is disposed substantially in the bolt hole 270 of bracket 140-1. This disposition of the bolt 112 beneficially protects the bolt 112 during deployment, for example from environmental factors such as radiation.

While the above description provides examples of one or more apparatus, methods, or systems, it will be appreciated that other apparatus, methods, or systems may be within the scope of the claims as interpreted by one of skill in the art.

## Claims

1. A hold and release mechanism ("HRM") system for releasably holding a deployable payload in a stowed configuration, the system comprising:
a first HRM bracket comprising:
a first bracket body having a conical portion; and
a first bracket connector for connecting the first HRM bracket to the deployable payload;
a second HRM bracket comprising:
a second bracket body having a conical portion; and
a second bracket connector for connecting the second HRM bracket to a platform on which the first deployable payload is stowed; and
a retaining device configured to releasably hold the first and second bracket bodies together in the stowed configuration, wherein the conical portion of the first bracket body nests with the conical portion of the second bracket body or the conical portion of the second bracket body nests in the conical portion of the first bracket body to form a separation interface of the HRM system.

2. The system of claim 1, wherein the first HRM bracket further comprises a first strut connecting the first bracket body to the first bracket connector, the first strut configured to release moments resulting from the interface of the first and second bracket bodies at the separation interface in the stowed configuration.

3. The system of claim 1, wherein the first bracket body or the second bracket body comprises a second conical portion that is coaxial with the conical portion of the respective bracket body, and wherein the second conical portion is configured to nest with a third HRM bracket to form a second separation interface of the HRM system.

4. The system of claim 2, wherein the first strut is configured such that lines of action of the first strut converge to a first convergence point.

5. The system of claim 4, wherein the first convergence point is located at a separation plane of the separation interface.

6. The system of claim 4, wherein the first bracket body includes a first hole configured to receive a rod or bolt of the retaining device and wherein the first convergence point is located on a longitudinal axis of the first hole.

7. The system of claim 3, wherein the second HRM bracket comprises a second strut configured such that lines of action of the second strut converge to a second convergence point, and wherein the first convergence point and the second convergence point are collocated.

8. The system of claim 2, wherein the first strut is configured in a simple lattice structure or a complex lattice structure.

9. A hold and release mechanism ("HRM") system for releasably holding a deployable payload in a stowed configuration, the system comprising:
a first HRM bracket configured to connect to a first deployable payload;
a second HRM bracket configured to connect to a second deployable payload;
a third HRM bracket configured to connect to a platform on which the first and second deployable payloads are stowed;
a retaining device comprising a HRM bolt, the retaining device configured to releasably hold the first and second HRM brackets and second and third HRM brackets together at first and second separation interfaces of the HRM system, respectively, by holding the HRM bolt, the retaining device configured to release the hold upon receiving a release input to the retaining device to allow separation at the first and second separation interfaces.

10. The HRM system of claim 9, wherein the HRM bolt is configured to break upon receipt of the release input by the retaining device thereby releasing the hold of the retaining device.

11. A method of holding a deployable payload by a HRM system in a stowed configuration for subsequent release, the method comprising:
nesting a conical portion of a first bracket in a conical portion of a second bracket for forming a first separation interface in the stowed configuration;
connecting the first bracket to the deployable payload and the second bracket to a platform on which the first deployable payload is stowed in the stowed configuration, or vice versa;
releasably holding, by a retaining device, the first and second brackets together at the separation interface, the retaining device configured to release the hold of the retaining device upon receipt of a release input by the retaining device.

12. The method of claim 11, wherein at least one of the first bracket and the second bracket comprise a plurality of struts configured to release moments resulting from the interface of the first bracket with at least one other bracket.

13. The method of claim 11, wherein the retaining device comprises a breakable component configured to break upon receipt of the release input by the retaining device, the break of the breakable component to allow separation at the separation interface.

14. The method of claim 11, wherein releasably holding the first and second brackets together comprises:
disposing a bolt of the retaining device through the first and second brackets;
holding the bolt at a second end of the bolt; and
preloading the bolt by retracting the bolt from a first end to compress the first and second brackets together.

15. The method of 11, further comprising delivering the release input to the retaining device to release the hold.
